# EUROPEAN PATENT SPECIFICATION

(11) **EP 3 114 927 B1**
(45) Date of publication and mention of the grant of the patent: **15.05.2019**
(21) Application number: 16177020.1
(22) Date of filing: 29.06.2016
(51) Int. Cl.: A01K 91/06, A01K 91/14

(54) **ANGLING RIG**
ANGELGESCHIRR
AGENCEMENT POUR LA PÊCHE

(30) Priority: 30.06.2015 GB 201511498; 15.07.2015 GB 201512396
(43) Date of publication of application: 11.01.2017
(73) Proprietor: Harris, Nigel, Ipswich Suffolk IP1 5SJ (GB); Paine, John, Gillingham Dorset SP8 4EL (GB)
(72) Inventor: Harris, Nigel William, Ipswich IP4 5SJ (GB)
(74) Representative: Murgitroyd & Company

(56) References cited:
- EP-A1- 2 322 036
- GB-A- 2 283 647
- GB-A- 2 453 559
- GB-A- 2 456 332
- GB-A- 2 457 246

## Description

The present invention concerns rigs for use by anglers or fishermen, and in particular rig tubing for use in carp fishing or the like, or leader material for use in coarse fishing, carp fishing or the like..

When an angler is fishing in still water, such as in a lake, it is generally important that the part of an angler's rig (or fishing rig) that lies below the surface of the water should remain still and invisible to fish.

Because a fishing line is very thin and lightweight, it is conventional to:
(a) thread the fishing line through a length of tubing (known as rig tubing), with the rig tubing located close to the hook and lead weight that are conventionally employed in fishing tackle; or
(b) use a leader material, such as a conventional lead-contaiining material known as leadcore.

Both in rig tubing and in leader materials, the relevant part (rig tubing or leader material, respectively) ensures that the adjacent portion of the line is kept in a stable position, typically on a lake bed when in use.

Various constructions of rig tubing are known; for example, GB2456332A discloses rig tubing in the form of a close-wound helix of metal wire surrounding a bore of the tubing, according to the preamble of independent claim 1. The metal wire helix is typically of constant diameter and of stainless steel. The use of metal wire in the form of a helix gives a relatively high weight per unit length to the tubing, and also allows the tubing to follow the contours of a water bed. It is also easy to thread a line through the tubing.

GB2456332A further discloses that the helix may be provided with a coloured outer surface; among the examples of such coloured outer surfaces disclosed in GB2456332A are ones obtained by painting the outer surface, by dipping the helix in a coating material, or by applying a shrink-fit sleeve to the outer surface of the helix.

It has not previously proposed to provide a braided sheath for such a helix. Braided sheaths for fishing lines have been proposed, but not, as indicated, for a helix as described above. An example of a fishing line comprising a multi-filament core surrounded by a braided tubular sheath is disclosed in GB2283647A, but there is no hint or suggestion of a sheath for anything other than a fishing line.

Braided fishing lines are known (for example, from GB2218312A and US Patent 2614451). Braided sheaths for angling rigs are also known, for example from GB2283647A, which discloses a fishing line in which the braided sheath surrounds multifilament core, which generally has positive buoyancy. Further examples of braided sheaths for angling are described in US Patent 4550938 (in which the sheath surrounds monofilament fishing line) and US Patent 3451305 (in which the sheath surrounds a braid of stainless steel monofilaments).

We have now developed an improved angling rig, which comprises a core according to the preamble of claim 1, and characterised by, surrounding the core, a coaxial sheath of braided synthetic polymer filamentary material.

By "concatenated member" we mean herein a series of elements that are connected to one another in sequence. By "flexible" we mean that the elongate member is able to flex transverse to the elongate direction, so that the elongate member can conform to the contours of a surface on which the concatenated member is laid. Such flexing is generally about each of the sequential connections, rather than as a result of flexing of the metal wire forming the respective concatenated members.

The metal forming the concatenated member may be of stainless steel (which is preferred); or of some other suitable grade of steel. Alternatively, the metal may be of copper or brass. A concatenated member of such metals can have desirable characteristics of weight per unit length, and also (because it is in the form of a concatenated member) the ability to drape itself over irregular surfaces. Also metals such as stainless steel, copper or brass have chemical resistance to immersion in water for protracted periods..

It is particularly preferred that the metal forming the concatenated member should have a density of at least 7.5 kg m⁻³. For example, stainless steel generally has a density of at least 7.5 kg m⁻³ ; brass a density of about 8.4 kg m⁻³ and copper a density of about 8.9 kg m⁻³. By comparison, lead has a density of about 11.3 kg m⁻³. The concatenated member according to the invention is, of course, intended to replace the lead that would be present in a conventional leadcore.

In a first preferred embodiment of the invention, the sequential connections between successive elements may be in the form of links, whereupon the concatenated member will be in the form of a chain. Such a "chain" comprises one or more series of connected links of metal, generally with the connections in regular repeated sequences. In this embodiment, the angling rig according to the invention typically comprises an angling leader material.

The chain may be of a type conventionally used in jewellery, and may take any suitable known flexible style. Examples of suitable styles of such chains include rope chains and snake chains. A rope chain comprises a series of open wire links linked in a twisted pattern to resemble a genuine rope. A snake chain comprises a tubular chain made from assembled curved plates or rings which fit together closely, making a chain with an appearance of a flexible tube with the texture of snakeskin. Snake chains are usually narrow and delicate; they are highly flexible and have a solid appearance instead of open links.

Such a chain for use in the angling rig according to the invention should be generally non-toxic, heavy (significantly heavier than water and negatively buoyant) and also flexible, such that the sheathed chain can conform to the bed of a body of water, thereby helping to stop line bites and helping to avoid "spooking" the fish away. The chain may, as indicated, be of stainless steel, copper, or brass.

In this first preferred embodiment, in which the angling rig comprises angling leader material, the latter generally has strength which derives predominantly from the braided coaxial sheath. In use, the sheath is generally cut or stripped back, exposing about 3.5 to 6.5 cm of the chain, to allow the chain to be spliced or tied to the swivel or to the main fishing line.

In a second (alternative) preferred embodiment of the invention, the sequential connections may be present between successive turns of a helix, whereupon the concatenated member is preferably in the form of a close-wound helix of metal wire. In the latter embodiment, the angling rig according to the invention will be tubular, and preferably permits a fishing line to be passed therethrough (along the interior of the tube that is formed by the helix).

The coaxial sheath in the angling rig according to the invention is formed of a plurality of individual synthetic polymer filaments (which are preferably monofilaments). Such individual filaments are braided coaxially about the helical wire, preferably in such a manner that each filament is contiguous with each adjacent filament. The braiding results in an interlaced or interweaved structure.

Each filament making up the sheath in the angling rig according to the invention may be of a synthetic polymer such as a polyamide (typically an aramid such as that available under the trade mark Kevlar), a polyester or a polyolefin. A particularly preferred such synthetic polymer is a high tensile polyethylene (an ultrahigh molecular weight polyethylene), such as that available under the trade mark Dyneema. The polymer is typically waterproof, although a minor amount of water absoprtion may be tolerated.

The filaments employed in the sheath of the angling rig according to the invention are preferably formed from the molten state by drawing at high speed. The filaments making up the sheath may be all of the same diameter (which is preferred), or they may be filaments of different diameters; all being braided together to form the coaxial sheath.

Such filaments are generally self-coloured (pigmented), so that the colour of the filaments remains substantially unfaded even after protracted use of the rig according to the invention. (Prior art coated helices for angling purposes tend to suffer fading or loss of colouring material over time.)

The filaments making up the sheath in the angling rig according to the invention may be all of the same colour. However, it is particularly preferred to employ filaments of different colours braided together to form the coaxial sheath. Employing filaments of different colours in this way permits a multicolour effect to be achieved, which can provide an advantageous camouflage effect when the angling rig is on or near the bed of a body of water.

To this end, anglers generally like their tackle to blend in with the underwater surface; suitable colours can therefore be chosen according to the desired fishing location, depending, for example, on whether the bed of the relevant body of water for fishing is sandy, muddy or covered in weed.

When the angling rig according to the invention is in the form of rig tubing (that is, when the concatenated member is in the form of a helix), it is, of course, a requirement that a fishing line can be easily threaded through the helix, so the inner diameter of the helix may vary according to the thickness of fishing line being used. The diameter of a typical fishing line may be about 0.35 mm, so the internal diameter of a suitable close-wound helix is typically from 0.4 mm to 2.0 mm.

The metal wire forming part of such a rig tubing according to the invention may be of stainless steel or another suitable grade of steel. A close-wound helix of such a steel helix, which is typically in the form of a coil spring, has desirable characteristics of weight per unit length and the ability to drape itself over irregular surfaces. Furthermore, it is easy to thread a line through the axial tube formed by the helix.

The present invention will now be further described, by way of example, with reference to the accompanying drawings, in which:
Figure 1 shows diagrammatically the configuration of a fishing rig with rig tubing fitted in a fishing line;
Figure 2 shows the hook end of the rig used in Figure1 in more detail; and
Figure 3 is a cross-section, on a much enlarged scale, of rig tubing according to the invention, with a fishing line running through and along the entire length of the rig tubing.

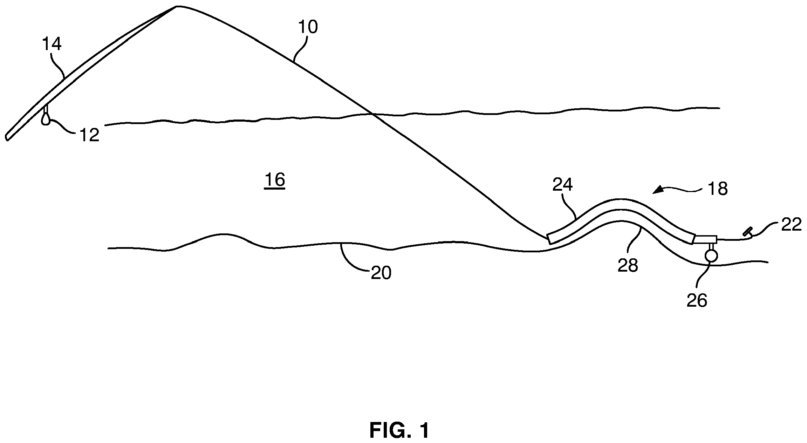

Figure 1 shows in diagrammatic representation a fishing situation where a fishing line 10 extends from a reel 12 on a rod 14 into a body of water 16. A fishing rig 18 is provided at the end of the rod 14; the rig 18 as shown rests on the bed 20 of the body of water and is terminated by a hook 22 (which is generally to be baited in use).

The rig 18 includes a length of fishing line 10; tied or spliced to the free end of the line 10 is a length of rig tubing 24; the end of rig tubing 24 is itself attached in conventional manner to a hook 22 and a lead weight 26. (Alternatively, the part designated 24 may be in the form of a leader material.)

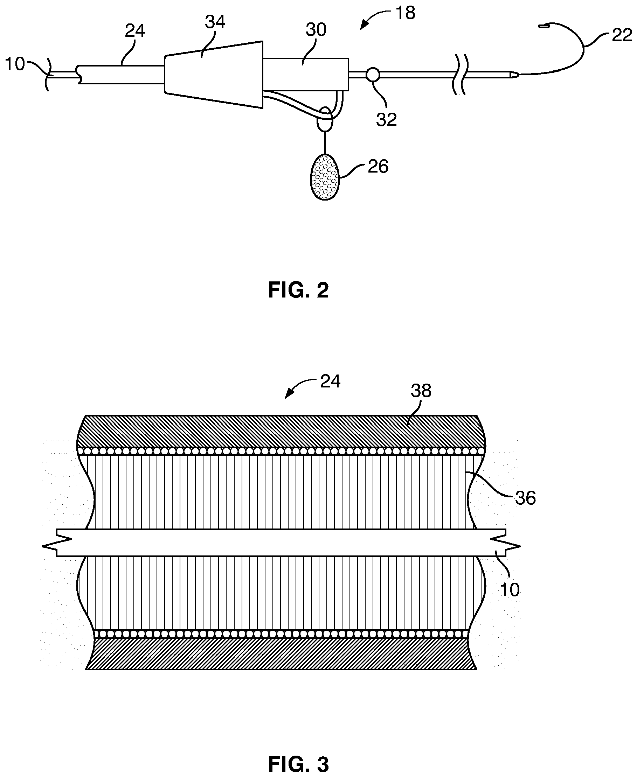

Referring to Figure 2, the rig 18 comprises a hook 22, a lead clip 30, a lead (weight) 26, a swivel 32 and a tail rubber 34. The tail rubber 34 has a through bore and a tapered outer surface as shown. The rig tubing 24 is pushed into the narrow end of the tail rubber 34, and the wider end fits over the lead clip 30 and holds the lead clip closed under normal conditions.

An exemplary leader material 24 according to the invention is shown in more detail, and on a greatly enlarged scale, in Figure 3. Specifically, the leader material consists of a flexible metal chain 36 (for example, of stainless steel) which can have a hollow core; surrounding the chain 36, and extending along the length thereof, is a coaxial braided sheath 38, made of braided filaments as described above.

As shown in Figure 2, the free end of chain has been stripped of braided sheath, to permit connection to the main fishing line, in an arrangement such as that shown in Figure 1.

The leader material 24 may be replaced by rig tubing in which the chain of Figure 2 is replaced by a core comprising a close-wound wire helix, with no gaps between the turns of the helix. In essence, such a helix would be wound in the manner of a spring. The helix thus defines a bore through which the line 10 can be threaded.

The present invention further comprises rig tubing according to the invention, in combination with a fishing line, the latter being threaded along the entire length of the helix (from one open end to the other).

Such rig tubing according to the invention may be commercially available in various selected standard lengths. It may sometimes be advantageous to coat the outer surface of the braided sheath forming part of the rig tubing according to the invention with a protective waterproof coating. Such a coating, which should of course be transparent, would typically be of cured polyurethane or the like.

## Claims

1. An angling rig (18) which comprises a core (36), wherein the core (36) comprises a negatively buoyant, elongate, flexible concatenated member of metal wire, and **characterised by**, surrounding the core (36), a coaxial sheath (38) of braided synthetic polymer filamentary material.

2. An angling rig (18) according to claim 1, which is in the form of angling leader material, wherein sequential connections between successive elements of the concatenated member are in the form of links, such that the concatenated member is in the form of a chain.

3. An angling rig (18) according to claim 2, wherein the chain comprises a snake chain.

4. An angling rig (18) according to claim 1, which is in the form of angling rig tubing (24), wherein the concatenated member comprises a close-wound helix of metal wire (36).

5. Angling rig (24) according to claim 4, in which a fishing line 10 is threaded along the length of the helix (36).

6. An angling rig (18) according to claim 4 or claim 5, wherein the sheath (38) is formed of a plurality of individual synthetic polymer filaments, which are braided coaxially about the helical wire such that each filament is contiguous with each adjacent filament.

7. An angling rig (18) according to any of claims 1 to 6, wherein the filaments making up the sheath (38) are all of substantially the same diameter.

8. An angling rig (18) according to any of claims 1 to 7, wherein the filaments are self-coloured.

9. Angling rig (24) according to claim 8, wherein the filaments making up the sheath (38) are of different colours braided together to form the coaxial sheath (38).

## Patentansprüche

1. Angelausrüstung (18), die einen Kern (36) umfasst, wobei der Kern (36) ein negativ schwimmfähiges, längliches, flexibles, verkettetes Element aus Metalldraht umfasst, und **gekennzeichnet durch** einen den Kern (36) umgebenden koaxialen Mantel (38) aus einem geflochtenen synthetischen Polymerfilamentmaterial.

2. Angelausrüstung (18) nach Anspruch 1, die in Form eines Angelleitermaterials vorliegt, wobei sequentielle Verbindungen zwischen sukzessiven Elementen des verketteten Elements in Form von Kettengliedern vorliegen, so dass das verkettete Element in Form einer Kette vorliegt.

3. Angelausrüstung (18) nach Anspruch 2, wobei die Kette eine Schlangenkette ist.

4. Angelausrüstung (18) nach Anspruch 1, die in Form eines Angelausrüstungsrohrs (24) vorliegt, wobei das verkettete Element eine eng gewundene Spirale aus Metalldraht (36) umfasst.

5. Angelausrüstung (24) nach Anspruch 4, in der eine Angelschnur (10) über die Länge der Spirale (36) gefädelt ist.

6. Angelausrüstung (18) nach Anspruch 4 oder Anspruch 5, wobei der Mantel (38) aus mehreren individuellen synthetischen Polymerfilamenten gebildet ist, die koaxial um den Spiraldraht geflochten sind, so dass jedes Filament mit jedem benachbarten Filament fortlaufend ist.

7. Angelausrüstung (18) nach einem der Ansprüche 1 bis 6, wobei die den Mantel (38) bildenden Filamente alle im Wesentlichen denselben Durchmesser haben.

8. Angelausrüstung (18) nach einem der Ansprüche 1 bis 7, wobei die Filamente einfarbig sind.

9. Angelausrüstung (24) nach Anspruch 8, wobei die den Mantel (38) bildenden Filamente aus unterschiedlichen Farben sind, die miteinander verflochten sind, um den koaxialen Mantel (38) zu bilden.

## Revendications

1. Un agencement pour la pêche (18) qui comprend un noyau (36), où le noyau (36) comprend un élément concaténé souple, allongé, à flottabilité négative de fil métallique, et **caractérisé par**, entourant le noyau (36), une gaine coaxiale (38) de matériau filamenteux polymère synthétique tressé.

2. Un agencement pour la pêche (18) selon la Revendication 1, qui est de la forme d'une avant-pièce de pêche, où des connexions séquentielles entre des éléments successifs de l'élément concaténé sont de la forme de maillons, de sorte que l'élément concaténé soit de la forme d'une chaîne.

3. Un agencement pour la pêche (18) selon la Revendication 2, où la chaîne comprend une chaîne serpentine.

4. Un agencement pour la pêche (18) selon la Revendication 1, qui est de la forme d'un tubage d'agencement pour la pêche (24), où l'élément concaténé comprend une hélice étroitement enroulée de fil métallique (36).

5. Un agencement pour la pêche (24) selon la Revendication 4, dans lequel une ligne de pêche 10 est torsadée le long de la longueur de l'hélice (36).

6. Un agencement pour la pêche (18) selon la Revendication 4 ou 5, où la gaine (38) est formée d'une pluralité de filaments polymères synthétiques individuels, qui sont tressés coaxialement autour du fil hélicoïdal de sorte que chaque filament soit contigu à chaque filament adjacent.

7. Un agencement pour la pêche (18) selon l'une quelconque des Revendications 1 à 6, où les filaments constituant la gaine (38) présentent tous sensiblement le même diamètre.

8. Un agencement pour la pêche (18) selon l'une quelconque des Revendications 1 à 7, où les filaments sont auto-colorés.

9. Un agencement pour la pêche (24) selon la Revendication 8, où les filaments constituant la gaine (38) sont de différentes couleurs tressés ensemble de façon à former la gaine coaxiale (38).
